# EUROPÄISCHE PATENTSCHRIFT

(11) **EP 1 636 074 B1**
(45) Veröffentlichungstag und Bekanntmachung des Hinweises auf die Patenterteilung: **13.12.2006**
(21) Anmeldenummer: 04740578.2
(22) Anmeldetag: 02.07.2004
(51) Int. Cl.: B60R 25/02

(54) **ELEKTRONISCHES LENKSCHLOSS UND ELEKTRONISCHER ZÜNDANLASSSCHALTER FÜR KRAFTFAHRZEUGE**
ELECTRONIC STEERING WHEEL LOCK, AND ELECTRONIC IGNITION SWITCH FOR MOTOR VEHICLES
ANTIVOL DE DIRECTION ELECTRONIQUE ET CONTACTEUR D'ALLUMAGE ELECTRONIQUE POUR DES VEHICULES AUTOMOBILES

(30) Priorität: 28.07.2003 DE 10334335
(43) Veröffentlichungstag der Anmeldung: 22.03.2006
(73) Patentinhaber: Huf Hülsbeck & Fürst GmbH & Co. KG, 42551 Velbert (DE)
(72) Erfinder: THRONBERENS, Stefan, 86559 Adelzhausen (DE); TRISCHBERGER, Werner, 85229 Langenpettenbach (DE)
(74) Vertreter: Oedekoven, Wolf Dieter
(86) Internationale Anmeldenummer: PCT/EP2004/007222
(87) Internationale Veröffentlichungsnummer: WO 2005/019004

(56) Entgegenhaltungen:
- WO-A-02/38424
- DE-A- 19 733 249
- DE-A1- 19 957 624
- US-A- 4 658 610

## Beschreibung

Die Erfindung bezieht sich auf ein elektronisches Lenkschloß und einen elektronischen Zündanlaßschalter für Kraftfahrzeuge der im Oberbegriff des Patentanspruchs 1 bzw. 6 angegebenen Gattung.

Ein solches elektronisches Kraftfahrzeug-Lenkschloß gemäß dem Oberbegriff des Anspruchs 1 und ein derartiger elektronischer Kraftfahrzeug-Zündanlaßschalter nach dem Oberbegriff des Anspruchs 6 sind bekannt (DE-C- 199 57 624). Sie sind gegenüber äußeren Schlägen auf den Stator insofern empfindlich, als solche Kraftstöße eine Axialverschiebung des Rotors entgegen der Wirkung seiner Federbelastung aus seiner Kuppelstellung mit dem Stator bewirken können, so daß-der Rotor aus seiner Ausgangsstellung gedreht zu werden vermag, ohne den Elektromagneten unter Verwendung des dem Lenkschloß bzw. dem Zündanlaßschalter zugeordneten elektronischen Schlüssels erregt zu haben.

Der Erfindung liegt die Aufgabe zugrunde, ein elektronisches Lenkschloß und einen elektronischen Zündanlaßschalter für Kraftfahrzeuge der im Oberbegriff des Patentanspruchs 1 bzw. 6 angegebenen Gattung mit einer Prellschlagsicherung zu versehen, so daß der Rotor nicht durch äußere Schläge auf den Stator außer Eingriff mit dem Stator kommen und dann aus seiner Ausgangsstellung gedreht werden kann.

Diese Aufgabe ist durch die im kennzeichnenden Teil des Patentanspruchs 1 bzw. 6 aufgeführten Merkmale gelöst. Vorteilhafte Weiterbildungen des erfindungsgemäßen elektronischen Kraftfahrzeug-Lenkschloßes sind in den Patentansprüchen 2 bis 5 angegeben, vorteilhafte Ausgestaltungen des erfindungsgemäßen elektronischen Kraftfahrzeug-Zündanlaßschalters in den Patentansprüchen 7 bis 10.

Nachstehend ist eine Ausführungsform des erfindungsgemäßen elektronischen Lenkschlosses für Kraftfahrzeuge anhand von Zeichnungen beispielsweise beschrieben. Darin zeigt:
Fig. 1 den Längsschnitt entlang der Längsachse des Rotors und der Längsachse des Sperrgliedes, wobei der Rotor in seiner Ausgangsstellung im Stator verriegelt ist und das Sperrglied sich in seiner Lenkspindel-Sperrstellung befindet;
Fig. 2 den Längsschnitt gemäß Fig. 1, wobei der Rotor mittels des Elektromagneten entriegelt worden ist;
Fig. 3 den Längsschnitt gemäß Fig. 2, wobei der Rotor um 90° im Uhrzeigersinn gedreht worden ist und das Sperrglied sich in seiner Lenkspindel-Freigabestellung befindet;
Fig. 4 den Längsschnitt gemäß Fig. 1, wobei der Rotor durch einen äußeren Schlag auf den Stator in die aus Fig. 2 ersichtliche Axialstellung im Stator verschoben worden ist.

Das dargestellte elektronische Lenkschloß zum Sperren der Lenkspindel 1 eines Kraftfahrzeugs gegen Drehen weist einen Stator 2, ein Sperrglied 3, ein Steuerglied 4, einen Rotor 5, ein Betätigungsglied 6 und einen Elektromagneten 7 auf und ist mittels eines nicht gezeigten elektronischen Fernbedienungsschlüssels entriegelbar.

Der Stator 2 ist als Gehäuse für das Sperrglied 3, das Steuerglied 4, den Rotor 5, das Betätigungsglied 6 und den Elektromagneten 7 ausgebildet und mittels eines hülsenförmigen Abschnitts 8 an einem mit einer Durchgangsöffnung 9 für das Sperrglied 3 versehenen Mantelrohr 10 befestigt, welches die Lenkspindel 1 und eine auf der Lenkspindel 1 befestigte Sperrhülse 11 mit nutenförmigen Sperrausnehmungen 12 umschließt, mit denen das Sperrglied 3 zusammenwirkt. Der hülsenförmige Abschnitt 8 des Stators 2 liegt an der äußeren Oberfläche des Mantelrohres 10 an.

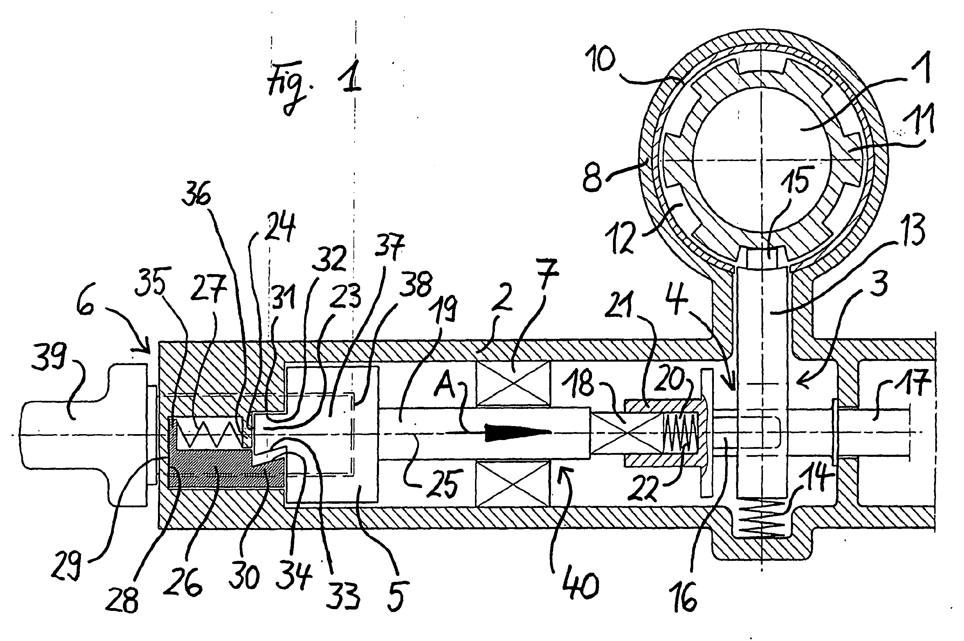

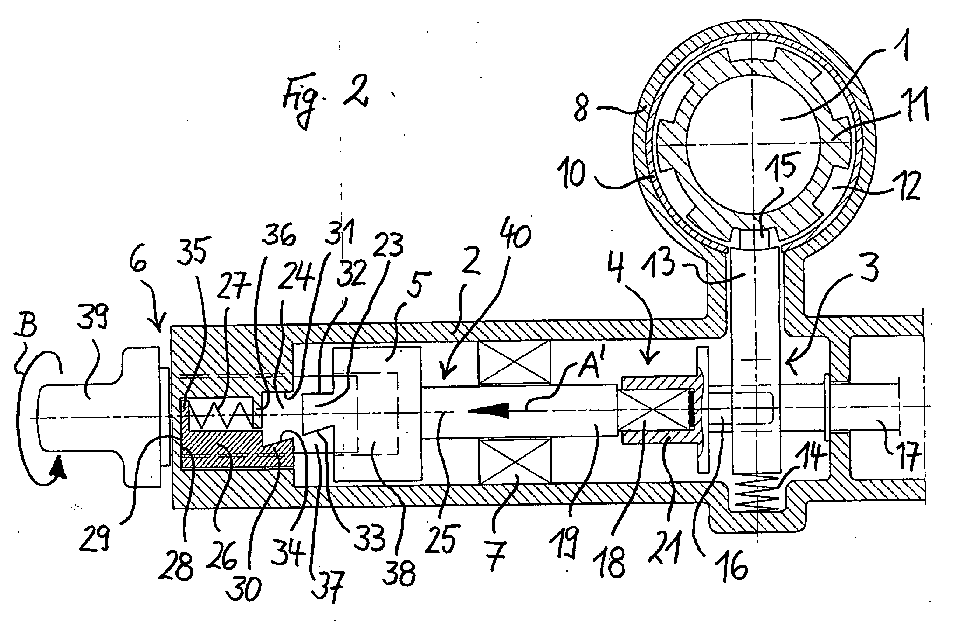

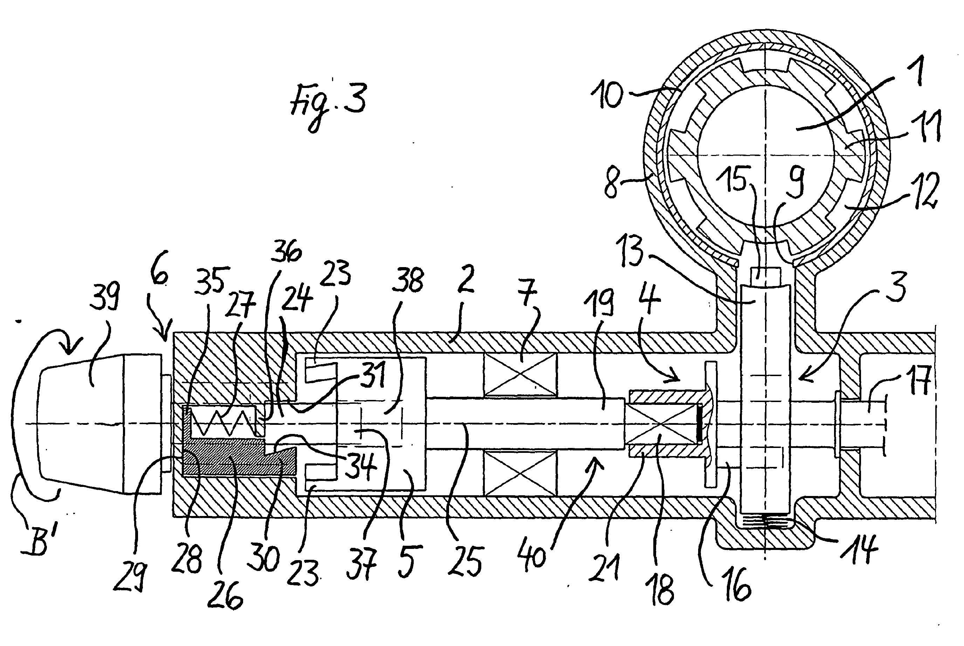

Das Sperrglied 3 ist von einem Sperrbolzen 13 gebildet, welcher sich senkrecht zur Lenkspindel 1 erstreckt und im Stator 2 axial verschieblich gelagert ist. Der Sperrbolzen 13 ist durch eine Schraubendruckfeder 14, welche sich einerseits am Stator 2 und andererseits am Sperrbolzen 13 abstützt, in Richtung auf die Lenkspindel 1 in die Lenkspindel-Sperrstellung gemäß Fig. 1, 2 belastet, in welcher der Sperrbolzen 13 mit seinem freien Ende 15 in eine Sperrausnehmung 12 der Sperrhülse 11 eingreift, so daß die Lenkspindel 1 nicht gedreht werden kann, und mittels des Steuergliedes 4 entgegen der Wirkung der Schraubendruckfeder 14 von der Lenkspindel 1 weg in die Lenkspindel-Freigabestellung nach Fig. 3 bewegbar, in welcher der Sperrbolzen 13 mit seinem freien Ende 15 in keine Sperrausnehmung 12 der Sperrhülse 11 eingreift, so daß die Lenkspindel 1 gedreht werden kann.

Das Steuerglied 4 ist stabförmig ausgebildet, erstreckt sich quer zum Sperrbolzen 13 durch eine nicht dargestellte Öffnung desselben hindurch, -weist einen Exzenter 16 zur Bewegung des Sperrbolzens 13 auf und wirkt an dem dem Rotor 5 abgewandten Ende 17 mit einem nicht gezeigten Zündanlaßschalter zusammen. Das Steuerglied 4 ist im Stator 2 aus der Drehstellung gemäß Fig. 1, 2 im Uhrzeigersinn in die Drehstellung nach Fig. 3 und zurück in die Drehstellung gemäß Fig. 1, 2 drehbar.

Der Rotor 5 wirkt mit dem Steuerglied 4 zusammen, um dasselbe zu drehen. Er ist im Stator 2 koaxial zum Steuerglied 4 angeordnet und drehbar sowie axial verschieblich gelagert und greift mit dem freien Ende 18 quadratischen Querschnitts einer stabförmigen axialen Verlängerung 19 in ein Sackloch 20 entsprechender Querschnittsgestalt des Steuergliedes 4 ein, welches in dem dem Exzenter 16 benachbarten Ende 21 des Steuergliedes 4 vorgesehen ist.

Der Rotor 5 ist im Stator 2 aus der Ausgangsstellung gemäß Fig. 1, 2 im Uhrzeigersinn in die Drehstellung nach Fig. 3 und zurück in die Ausgangsstellung gemäß Fig. 1, 2 drehbar sowie zwischen der Axialstellung gemäß Fig. 1 und der Axialstellung nach Fig, 2, 3 axial hin- und herbeweglich. In seiner Ausgangsstellung ist der Rotor 5 unter der Wirkung einer im Sackloch 20 des Steuergliedes 4 angeordneten Schraubendruckfeder 22 mit dem Stator 2 formschlüssig kuppelbar, so daß er nicht gedreht werden kann. Dazu weist der Rotor 5 zwei einander diametral gegenüberliegende, axial abstehende Kuppelnasen 23 zum Eingriff in zwei einander diametral gegenüberliegende Kuppelnuten 24 des Stators 2 auf, welche parallel zur Längsachse 25 des Rotors 5 verlaufen.

Jede Kuppelnut 24 des Stators 2 ist auf derjenigen Seite, zu welcher hin der Rotor 5 aus seiner Ausgangsstellung drehbar ist, durch einen Trägheitskörper 26 begrenzt, der im Stator 2 parallel zur Rotorlängsachse 25 verschieblich gelagert und durch eine Schraubendruckfeder 27 in die Ruhestellung gemäß Fig. 1 bis 3 belastet ist, in welcher der Trägheitskörper 26 mit der dem Rotor 5 abgewandten Stirnfläche 28 an einer Gegenfläche 29 des Stators 2 anliegt und mit dem dem Rotor 5 benachbarten Ende 30 der am Stators 2 vorgesehenen Seitenflanke 31 der Kuppelnut 24 gegenüberliegt. Während diese Seitenflanke 31 der Kuppelnut 24 und die in der Axialstellung gemäß Fig. 1 des Rotors 5 im Stator 2 der Seitenflanke 31 zugewandte Seitenfläche 32 der der Kuppelnut 24 zugeordneten Kuppelnase 23 des Rotors 5 sich parallel zur Rotorlängsachse 25 erstrecken, verlaufen die beiden einander zugewandten, zueinander parallelen Seitenflächen 33 und 34 der Kuppelnase 23 bzw. des Trägheitskörpers 26 an dessen dem Rotor 5 benachbarten Ende 30 schräg zur Rotorlängsachse 25, so daß beim Gegeneinanderdrücken der Seitenflächen 33, 34 der Rotor 5 und der Trägheitskörper 26 axial aufeinander zu belastet werden. Die den Trägheitskörper 26 in seine Ruhestellung belastende Schraubendruckfeder 27 ist parallel zum Trägheitskörper 26 angeordnet und stützt sich einerseits am Trägheitskörper 26 und andererseits am Stator 2 ab, nämlich einerseits an einem seitlichen Vorsprung 35 des Trägheitskörpers 26, welcher an dessen dem Rotor 5 fernen Ende mit der Stirnfläche 28 vorgesehen ist, und andererseits an einem inneren Vorsprung 36 des Stators 2, welcher den Boden der Kuppelnut 24 bildet.

Das Betätigungsglied 6 dient dazu, den Rotor 5 von Hand zu drehen. Es ist im Stator 2 drehbar gelagert, greift mit seinem inneren Ende 37 rechteckigen Querschnitts in ein Sackloch 38 entsprechender Querschnittsgestalt des Rotors 5 ein und weist einen äußeren Handgriff 39 auf.

Der Elektromagnet 7 wirkt mit dem Rotor 5 zusammen, um den Rotor 5 entgegen der Wirkung der Schraubendruckfeder 22 im Stator 2 axial zu verschieben, wenn der Elektromagnet 7 erregt wird. Der Elektromagnet 7 ist im Stator 2 koaxial zum Steuerglied 4 und zum Rotor 5 angeordnet, und zwar zwischen dem Steuerglied 4 und dem Rotor 5. Der Elektromagnet 7 weist einen durchgehenden, axial beweglichen Anker 40 auf, welcher von der axialen Verlängerung 19 des Rotors 5 gebildet ist.

Das dargestellte elektronische Lenkschloß für Kraftfahrzeuge funktioniert folgendermaßen.

Im Lenkschloßzustand nach Fig. 1 befindet sich der Sperrbolzen 13 in der Lenkspindel-Sperrstellung, so daß die Lenkspindel 1 nicht gedreht werden kann. Der Rotor 5 ist in seiner Ausgangsstellung im Stator 2 verriegelt, so daß er ebenfalls nicht gedreht werden kann, weil seine beiden Kuppelnasen 23 in die beiden Kuppelnuten 24 des Stators 2 eingreifen.

Um den Sperrbolzen 13 in seine Lenkspindel-Freigabestellung zu bewegen, in welcher die Lenkspindel 1 gedreht werden kann, wird der oben erwähnte elektronische Fernbedienungsschlüssel betätigt, was die Erregung des Elektromagneten 7 bewirkt, so daß dessen den Anker 40 umgebende, ringförmige Spule von elektrischem Strom durchflossen wird und der Elektromagnet 7 den Rotor 5 entgegen der Wirkung seiner Schraubendruckfeder 22 in Richtung des Pfeils A in Fig. 1 bewegt. Dabei verlassen die Kuppelnasen 23 des Rotors 5 die Kuppelnuten 24 des Stators 2, so daß der Rotor 5 im Stator 2 gedreht werden kann. Es ergibt sich der Lenkschloßzustand gemäß Fig. 2.

Anschließend wird der entriegelte Rotor 5 aus seiner Ausgangsstellung im Stator 2 gemeinsam mit dem Steuerglied 4 mit Hilfe des Betätigungsgliedes 6 in Richtung des Pfeils B in Fig. 2 gedreht, um den Sperrbolzen 13 entgegen der Wirkung seiner Schraubendruckfeder 14 mittels des Exzenters 16 des Steuergliedes 4 in seine Lenkspindel-Freigabestellung zu bewegen. Es ergibt sich der Lenkschloßzustand nach Fig. 3.

Um den Sperrbolzen 13 wieder in die Lenkspindel-Sperrstellung gelangen zu lassen, werden der Rotor 5 und das Steuerglied 4 aus der gemeinsamen Drehstellung gemäß Fig. 3 in Richtung des Pfeils B' mit Hilfe des Betätigungsgliedes 6 in die gemeinsame Ausgangsstellung gemäß Fig. 2 zurückgedreht, in welcher der Rotor 5 durch seine Schraubendruckfeder 22 in Richtung des Pfeils A' in die aus Fig. 1 ersichtliche Kuppelstellung mit dem Stator 2 zurückgeschoben werden kann, so daß der Rotor 5 infolge des Eingriffs seiner Kuppelnasen 23 in die Kuppelnuten 24 des Stators 2 nicht gedreht werden kann und im Stator 2 wieder verriegelt ist.

Die beiden Trägheitskörper 26, welche den beiden einander bezüglich der Rotorlängsachse 25 diametral gegenüberliegenden Kuppelnuten 24 des Stators 2 zugeordnet sind, wirken im Lenkschloßzustand nach Fig. 1 als Prellschlagsicherung, indem sie verhindern, daß der Rotor 5 durch äußere Schläge auf den Stator 2 außer Eingriff mit dem Stator 2 kommt, um dann aus seiner Ausgangsstellung im Stator 2 gedreht werden zu können. Die Trägheitskörper 26 machen es also unmöglich, den Rotor 5 im Stator 2 ohne Erregung des Elektromagneten 7 zu entriegeln.

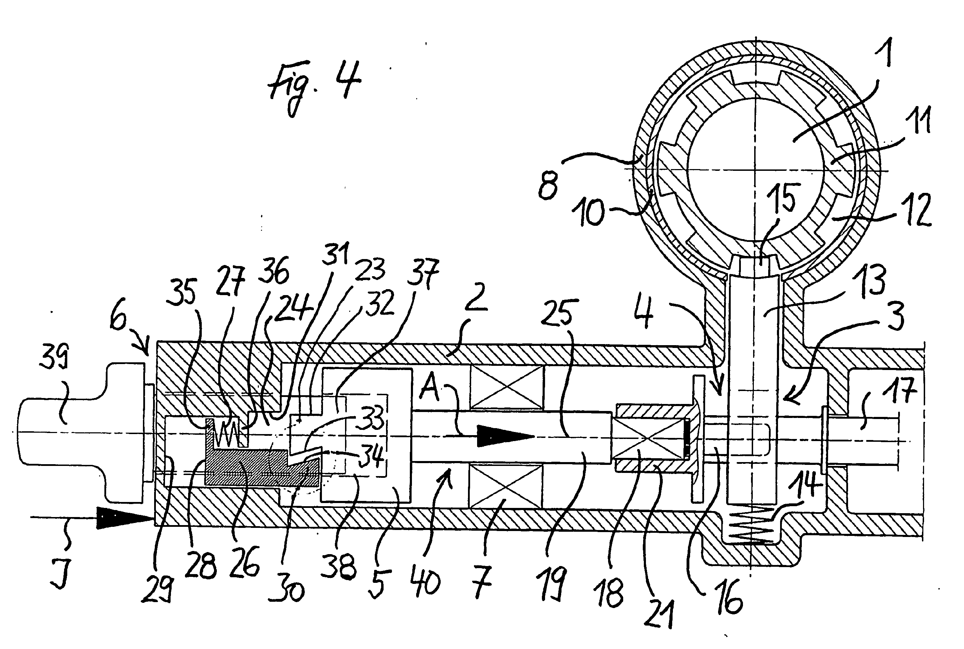

Wie aus Fig. 4 ersichtlich, bewirkt ein zur Rotorlängsachse 25 paralleler äußerer Schlag oder Kraftstoß J auf das Ende des Stators 2, welches dem Rotor 5 benachbart ist und von dem der Handgriff 39 des Betätigungsgliedes 6 absteht, sowohl eine Axialverschiebung des Rotors 5 entgegen der Wirkung seiner Schraubendruckfeder 22 als auch eine Axialverschiebung der beiden Trägheitskörper 26 entgegen der Wirkung der jeweiligen Schraubendruckfeder 27. Der Rotor 5 und die Trägheitskörper 26 verschieben sich also gemeinsam in Richtung des Pfeils A im Stator 2, so daß die beiden rotorseitigen Enden 30 der Trägheitskörper 26 sich immer vor den beiden einander bezüglich der Rotorlängsachse 25 diamentral gegenüberliegenden Kuppelnasen 23 des Rotors 5 erstrecken und jegliches Drehen des Rotors 5 im Stator 2 aus seiner Ausgangsstellung im Uhrzeigersinn blockieren, wobei die Keilwirkung der beiden schrägen Seitenflächen 33 der Kuppelnasen 23 des Rotors 5 und der beiden schrägen Seitenflächen 34 der Enden 30 der Trägheitskörper 26 den Zusammenhalt des Rotors 5 und der Trägheitskörper 26 unterstützt.

Entsprechend kann auch ein elektronischer Zündanlaßschalter für Kraftfahrzeuge ausgebildet werden, bei dem der Rotor 5 zum Ein- und Ausschalten insbesondere der Zündanlage und des Anlassers des Kraftfahrzeugs im Stator 2 aus seiner Ausgangsstellung in verschiedene Schaltstellungen und zurück in die Ausgangsstellung drehbar ist.

## Patentansprüche

1. Elektronisches Lenkschloß für Kraftfahrzeuge, welches mittels eines elektronischen Schlüssels entriegelbar ist und ein Sperrglied (3) zum Sperren der Kraftfahrzeug-Lenkspindel (1) gegen Drehen sowie einen Rotor (5) aufweist, der zum Hin- und Herbewegen des Sperrgliedes (3) zwischen einer Lenkspindel-Sperrstellung und einer Lenkspindel-Freigabestellung in einem Stator (2) aus einer Ausgangsstellung und zurück in die Ausgangsstellung drehbar ist, wobei der Rotor (5) erst dann aus der Ausgangsstellung gedreht werden kann, so daß das Sperrglied (3) sich in die Lenkspindel-Freigabestellung bewegt, wenn ein im Stator (2) koaxial zum Rotor (5) angeordneter Elektromagnet (7) mit Hilfe des elektronischen Schlüssels erregt worden ist, um den Rotor (5) zu entriegeln, welcher in seiner Ausgangsstellung unter der Wirkung einer Federbelastung (22) mit dem Stator (2) formschlüssig gekuppelt ist, und im Stator (2) mittels des Elektromagneten (7) entgegen der Wirkung der Federbelastung (22) axial verschiebbar ist, um den gegenseitigen Eingriff des Rotors (5) und des Stators (2) aufzuheben, **dadurch gekennzeichnet, daß** der Rotor (5) mindestens eine Kuppelnase (23) aufweist, welche mit einer Kuppelnut (24) des Stators (2) zusammenwirkt, die auf der Seite, zu welcher hin der Rotor (5) aus seiner Ausgangsstellung drehbar ist, durch einen Trägheitskörper (26) begrenzt ist, der im Stator (2) entgegen der Wirkung einer Federbelastung zusammen mit dem Rotor (5) verschiebbar ist, wenn der Rotor (5) sich infolge eines Schlages auf den Stator (2) entgegen der Wirkung seiner Federbelastung axial verschiebt.

2. Lenkschloß nach Anspruch 1, **dadurch gekennzeichnet, daß** die beiden einander zugewandten, zueinander parallelen Seitenflächen (33,34) der Kuppelnase (23) des Rotors (5) und des Trägheitskörpers (26) des Stators (2) schräg zur Rotorlängsachse (25) verlaufen, so daß beim Gegeneinanderdrücken der Seitenflächen (33,34) der Rotor (5) und der Trägheitskörper (26) axial aufeinander zu belastet werden.

3. Lenkschloß nach Anspruch 1 oder 2, **dadurch gekennzeichnet, daß** die Kuppelnase (23) des Rotors (5) axial vom Rotor (5) absteht und die Kuppelnut (24) des Stators (2) parallel zur Rotorlängsachse (25) verläuft.

4. Lenkschloß nach Anspruch 1, 2 oder 3, **dadurch gekennzeichnet, daß** der Trägheitskörper (26) des Stators (2) durch eine Schraubendruckfeder (27) in seine Ruhestellung belastet ist, welche sich einerseits am Trägheitskörper (26) und andererseits am Stator (2) abstützt.

5. Lenkschloß nach einem der vorstehenden Ansprüche, **dadurch gekennzeichnet, daß** der Rotor (5) zwei einander diametral gegenüberliegende Kuppelnasen (23) aufweist, welche jeweils mit einer seitlich von einem Trägheitskörper (26) begrenzten Kuppelnut (24) des Stators (2) zusammenwirken.

6. Elektronischer Zündanlaßschalter für Kraftfahrzeuge, welcher mittels eines elektronischen Schlüssels entriegelbar ist und einen Rotor aufweist, der zum Ein- und Ausschalten insbesondere der Zündanlage und des Anlassers des Kraftfahrzeugs in einem Stator aus einer Ausgangsstellung in verschiedene Schaltstellungen und zurück in die Ausgangsstellung drehbar ist, wobei der Rotor erst dann in die Schaltstellungen gedreht werden kann, wenn ein im Stator koaxial zum Rotor angeordneter Elektromagnet mit Hilfe des elektronischen Schlüssels erregt worden ist, um den Rotor zu entriegeln, welcher in seiner Ausgangsstellung unter der Wirkung einer Federbelastung mit dem Stator formschlüssig gekuppelt ist und im Stator mittels des Elektromagneten entgegen der Wirkung der Federbelastung axial verschiebbar ist, um den gegenseitigen Eingriff des Rotors und des Stators aufzuheben,
**dadurch gekennzeichnet, daß** der Rotor (5) mindestens eine Kuppelnase (23) aufweist, welche mit einer Kuppelnut (24) des Stators (2) zusammenwirkt, die auf der Seite, zu welcher hin der Rotor (5) aus seiner Ausgangsstellung drehbar ist, durch einen Trägheitskörper (26) begrenzt ist, der im Stator (2) entgegen der Wirkung einer Federbelastung zusammen mit dem Rotor (5) verschiebbar ist, wenn der Rotor (5) sich infolge eines Schlages auf den Stator (2) entgegen der Wirkung seiner Federbelastung axial verschiebt.

7. Zündanlaßschalter nach Anspruch 6, **dadurch gekennzeichnet, daß** die beiden einander zugewandten, zueinander parallelen Seitenflächen (33,34) der Kuppelnase (23) des Rotors (5) und des Trägheitskörpers (26) des Stators (2) schräg zur Rotorlängsachse (25) verlaufen, so daß beim Gegeneinanderdrücken der Seitenflächen (33,34) der Rotor (5) und der Trägheitskörper (26) axial aufeinander zu belastet werden.

8. Zündanlaßschalter nach Anspruch 6 oder 7, **dadurch gekennzeichnet, daß** die Kuppelnase (23) des Rotors (5) axial vom Rotor (5) absteht und die Kuppelnut (24) des Stators (2) parallel zur Rotorlängsachse (25) verläuft.

9. Zündanlaßschalter nach Anspruch 6, 7 oder 8, **dadurch gekennzeichnet, daß** der Trägheitskörper (26) des Stators (2) durch eine Schraubendruckfeder (27) in seine Ruhestellung belastet ist, welche sich einerseits am Trägheitskörper (26) und andererseits am Stator (2) abstützt.

10. Zündanlaßschalter nach einem der Ansprüche 6 bis 9, **dadurch gekennzeichnet, daß** der Rotor (5) zwei einander diametral gegenüberliegende Kuppelnasen (23) aufweist, welche jeweils mit einer seitlich von einem Trägheitskörper (26) begrenzten Kuppelnut (24) des Stators (2) zusammenwirken.

## Claims

1. Electronic steering wheel lock for motor vehicles, which can be unlocked by means of an electronic key and has a locking member (3) for locking the motor vehicle steering shaft (1) against rotation and also has a rotor (5), which is rotatable out of an initial position and back into the initial position in order to move the locking member (3) back and forth between a steering shaft locking position and a steering shaft releasing position in a stator (2), wherein the rotor (5) cannot be rotated out of the initial position, so that the locking member (3) moves into the steering shaft releasing position until an electromagnet (7), disposed in the stator (2) coaxially with the rotor (5), has been energised with the aid of the electronic key, in order to unlock the rotor (5), which in its initial position, under the influence of a spring load (22), is coupled positively with the stator (2) and is axially displaceable in the stator (2) by means of the electromagnet (7) against the action of the spring load (22) in order to release the mutual engagement of the rotor (5) and the stator (2),
**characterised in that**
the rotor (5) has at least one coupling dog (23), which cooperates with a coupling slot (24) of the stator (2), which slot is defined, on the side towards which the rotor (5) is rotatable out of its initial position, by an inertial element (26), which is displaceable in the stator (2) together with the rotor (5) against the action of a spring load when the rotor (5), as a consequence of a blow on the stator (2), is axially displaced against the action of its spring load.

2. Steering wheel lock according to claim 1,
**characterised in that**
the two side faces (33, 34), extending parallel to one another and orientated towards one another, of the coupling dog (23) of the rotor (5) and of the inertial element (26) of the stator (2) extend obliquely to the longitudinal axis (25) of the rotor, so that when the side faces (33, 34) are pressed against one another, the rotor (5) and the inertial element (26) are loaded axially towards one another.

3. Steering wheel lock according to claim 1 or 2,
**characterised in that**
the coupling dog (23) of the rotor (5) protrudes axially from the rotor (5), and the coupling slot (24) of the stator (2) extends parallel to the longitudinal axis (25) of the rotor.

4. Steering wheel lock according to claim 1, 2 or 3,
**characterised in that**
the inertial element (26) of the stator (2) is loaded into its rest position by a helical compression spring (27), which is supported at one end on the inertial element (26) and at the other end on the stator (2).

5. Steering wheel lock according to any one of the preceding claims,
**characterised in that**
the rotor (5) has two diametrically opposed coupling dogs (23), which each cooperate with a respective coupling slot (24) of the stator (2), which slot is defined laterally by an inertial element (26).

6. Electronic ignition and starting switch for motor vehicles, which can be unlocked by means of an electronic key and has a rotor, which, in order to switch on and off in particular the ignition system and the starter of the motor vehicle, is rotatable in a stator out of an initial position into various switching positions and back into the initial position, wherein the rotor cannot be rotated into the switching positions until an electromagnet, disposed in the stator coaxially with the rotor, has been energised with the aid of the electronic key in order to unlock the rotor, which in its initial position, under the influence of a spring load, is coupled positively with the stator, and is axially displaceable in the stator by means of the electromagnet against the action of the spring load, in order to release the mutual engagement of the rotor and the stator,
**characterised in that**
the rotor (5) has at least one coupling dog (23), which cooperates with a coupling slot (24) of the stator (2), which slot is defined, on the side towards which the rotor (5) is rotatable out of its initial position, by an inertial element (26) which is displaceable in the stator (2) together with the rotor (5) against the action of a spring load when the rotor (5), as a consequence of a blow on the stator (2), is axially displaced against the action of its spring load.

7. Ignition and starting switch according to claim 6,
**characterised in that**
the two side faces (33, 34), extending parallel to one another and orientated towards one another, of the coupling dog (23) of the rotor (5) and of the inertial element (26) of the stator (2) extend obliquely to the longitudinal axis (25) of the rotor, so that when the side faces (33, 34) are pressed against one another, the rotor (5) and the inertial element (26) are loaded axially towards one another.

8. Ignition and starting switch according to claim 6 or 7,
**characterised in that**
the coupling dog (23) of the rotor (5) protrudes axially from the rotor (5), and the coupling slot (24) of the stator (2) extends parallel to the longitudinal axis (25) of the rotor.

9. Ignition and starting switch according to claim 6, 7 or 8,
**characterised in that**
the inertial element (26) of the stator (2) is loaded into its rest position by a helical compression spring (27), which is supported at one end on the inertial element (26) and at the other end on the stator (2).

10. Ignition and starting switch according to any one of claims 6 to 9,
**characterised in that**
the rotor (5) has two diametrically opposed coupling dogs (23), which each cooperate with a respective coupling slot (24) of the stator (2), which slot is defined laterally by an inertial element (26).

## Revendications

1. Verrou de direction électronique pour véhicules à moteur, pouvant être déverrouillé au moyen d'une clé électronique et comportant un organe de verrouillage (3) pour le blocage de l'arbre de direction (1) du véhicule à moteur en vue d'empêcher sa rotation, ainsi qu'un rotor (5) pouvant être tourné dans un stator (2) à partir d'une position de départ et pour revenir à la position de départ en vue du déplacement en va-et-vient de l'organe de verrouillage (3) entre une position de verrouillage de l'arbre de direction et une position de déverrouillage de celui-ci, le rotor (5) ne pouvant être tourné à partir de la position de départ, de sorte que l'organe de verrouillage (3) se déplace dans la position de déverrouillage de l'arbre de direction, que lorsqu'un électroaimant (7) disposé dans le stator (2) en position coaxiale du rotor (5) a été excité à l'aide de la clé électronique pour déverrouiller le rotor (5), qui est couplé par engagement positif avec le stator (2) dans sa position de départ sous l'action d'une contrainte par ressort (22) et peut être déplacé dans le sens axial dans le stator (2) au moyen de l'électroaimant (7) contre l'action de la contrainte par ressort (22) pour abolir l'engagement entre le rotor (5) et le stator (2), **caractérisé en ce que** le rotor (5) possède au moins un ergot de couplage (23) qui coopère avec une gorge de couplage (24) du stator (2), qui est délimitée, du côté vers lequel le rotor (5) peut être tourné à partir de sa position de départ, par un élément à inertie (26) pouvant être déplacé dans le stator (2) contre l'action d'une contrainte par ressort en même temps que le rotor (5), lorsque le rotor (5) se déplace dans le sens axial contre l'action de sa contrainte par ressort à la suite d'un coup sur le stator (2).

2. Verrou de direction selon la revendication 1, **caractérisé en ce que** les deux surfaces latérales (33, 34) qui se font face et sont parallèles l'une à l'autre sur l'ergot de couplage (23) du rotor (5) et l'élément à inertie (26) du stator (2) sont obliques par rapport à l'axe longitudinal (25) du rotor, de sorte que lorsque les surfaces latérales (33, 34) sont pressées l'une contre l'autre, le rotor (5) et l'élément à inertie (26) sont contraints l'un vers l'autre dans le sens axial.

3. Verrou de direction selon la revendication 1 ou 2, **caractérisé en ce que** l'ergot de couplage (23) du rotor (5) dépasse du rotor (5) dans le sens axial et la gorge de couplage (24) du stator (2) est parallèle à l'axe longitudinal (25) du rotor.

4. Verrou de direction selon la revendication 1, 2 ou 3, **caractérisé en ce que** l'élément à inertie (26) du stator (2) est contraint dans sa position de repos par un ressort hélicoïdal de compression (27) qui s'appuie d'une part sur l'élément à inertie (26) et d'autre part sur le stator (2).

5. Verrou de direction selon l'une quelconque des revendications précédentes, **caractérisé en ce que** le rotor (5) présente deux ergots de couplage (23) diamétralement opposés, dont chacun coopère avec une gorge de couplage (24) du stator (2) délimitée latéralement par un élément à inertie (26).

6. Interrupteur électronique d'allumage et de démarrage pour véhicules à moteur, qui peut être déverrouillé à l'aide d'une clé électronique et possède un rotor pouvant être tourné dans un stator à partir d'une position de départ dans différentes positions de commutation et pour revenir à la position de départ pour mettre en marche et arrêter en particulier l'installation d'allumage et le démarreur du véhicule à moteur, le rotor ne pouvant être tourné dans les positions de commutation que lorsqu'un électroaimant disposé dans le stator de façon coaxiale au rotor a été excité à l'aide de la clé électronique pour déverrouiller le rotor, qui est couplé par engagement positif avec le stator dans sa position de départ sous l'action d'une contrainte par ressort et peut être déplacé dans le sens axial dans le stator au moyen de l'électroaimant contre l'action de la contrainte par ressort pour abolir l'engagement entre le rotor et le stator, **caractérisé en ce que** le rotor (5) possède au moins un ergot de couplage (23) qui coopère avec une gorge de couplage (24) du stator (2), qui est délimitée du côté vers lequel le rotor (5) peut tourner à partir de sa position de départ, par un élément à inertie (26) pouvant être déplacé dans le stator (2) contre l'action d'une contrainte par ressort en même temps que le rotor (5), lorsque le rotor (5) se déplace dans le sens axial contre l'action de sa contrainte par ressort à la suite d'un coup sur le stator (2).

7. Interrupteur d'allumage et de démarrage selon la revendication 6, **caractérisé en ce que** les deux surfaces latérales (33, 34) qui se font face et sont parallèles l'une à l'autre sur l'ergot de couplage (23) du rotor (5) et l'élément à inertie (26) du stator (2) sont obliques par rapport à l'axe longitudinal (25) du rotor, de sorte que lorsque les surfaces latérales (33, 34) sont pressées l'une contre l'autre, le rotor (5) et l'élément à inertie (26) sont contraints l'un vers l'autre dans le sens axial.

8. Interrupteur d'allumage et de démarrage selon la revendication 6 ou 7, **caractérisé en ce que** l'ergot de couplage (23) du rotor (5) dépasse du rotor (5) dans le sens axial et la gorge de couplage (24) du stator (2) est parallèle à l'axe longitudinal (25) du rotor.

9. Interrupteur d'allumage et de démarrage selon la revendication 6, 7 ou 8, **caractérisé en ce que** l'élément à inertie (26) du stator (2) est contraint dans sa position de repos par un ressort hélicoïdal de compression (27) qui s'appuie d'une part sur l'élément à inertie (26) et d'autre part sur le stator (2).

10. Interrupteur d'allumage et de démarrage selon l'une quelconque des revendications 6 à 9, **caractérisé en ce que** le rotor (5) présente deux ergots de couplage (23) diamétralement opposés, dont chacun coopère avec une gorge de couplage (24) du stator (2) délimitée latéralement par un élément à inertie (26).
